# DEMANDE DE BREVET EUROPEEN

(11) **EP 1 659 531 A1**
(43) Date de publication de la demande: **24.05.2006**
(21) Numéro de dépôt: 05292405.7
(22) Date de dépôt: 14.11.2005
(51) Int. Cl.: G06Q 30/00

(54) **Procédé et système de gestion d'une flotte de véhicules, et véhicule associé**

(30) Priorité: 22.11.2004 FR 0412374
(71) Demandeur: JCDecaux SA, 92200 Neuilly-Sur-Seine (FR)
(72) Inventeur: Le Gars, Jacques, 78950 Gambais (FR)
(74) Mandataire: Louiset, Raphael

(57) **Abrégé**

L'invention propose un système de gestion d'une flotte de véhicules (2) propres à être remisés à au moins une station (3a, 3b, 3c) comprenant des emplacements (4) pour des véhicules (2), la station (3a, 3b, 3c) étant décrétée disponible lorsque l'un au moins de ses emplacements (4) est libre de tout véhicule (2), et indisponible lorsque chaque emplacement de la station (3a, 3b, 3c) est occupé par un véhicule (2), ce système comprenant :
- des moyens pour évaluer la disponibilité de la station (3a, 3b, 3c) ;
- des moyens (10) de communication à distance avec un véhicule (2) non remisé ;
- des moyens d'affichage au niveau du véhicule (2) de l'information de disponibilité.

## Description

L'invention a trait à la gestion des flottes de véhicules à usage collectif, et en particulier, bien que non seulement, à la gestion d'une flotte de bicyclettes proposées à la location.

Aujourd'hui certaines villes sont équipées de systèmes automatisés de location de bicyclettes permettant à chaque citadin d'emprunter une bicyclette pour effectuer un parcours urbain.

Ces systèmes comportent une ou plusieurs stations munie chacune d'emplacements où peuvent être stockées les bicyclettes, chaque emplacement étant, en pratique, matérialisé par une borne à laquelle peut être accrochée une bicyclette. Les bornes sont reliées à un automate muni d'une interface utilisateur permettant à un usager de commander, contre communication d'informations spécifiques, telles que ses coordonnées bancaires ou un code utilisateur prédéterminé, le déverrouillage d'une borne pour permettre à l'usager de disposer de la bicyclette correspondante.

Une procédure de location d'une bicyclette, une borne et ses moyens de verrouillage sont décrits en détails dans les demandes internationales publiées sous les numéro WO 02/095698 et WO 01/54080 au nom de la demanderesse, auxquelles l'homme du métier pourra se référer.

Une fois la bicyclette à disposition de l'usager, celui-ci peut se rendre librement à la destination de son choix. Toutefois, il doit conserver à l'esprit l'obligation qui lui est faite de remiser, lorsque la location prend fin, la bicyclette à une station. On comprend qu'à cet effet ladite station doit comporter au moins un emplacement libre (la station étant alors décrétée disponible). A défaut (la station étant décrétée indisponible), l'usager se voit contraint de rechercher une station disponible. Compte tenu du temps ainsi perdu, des pénalités de retard peuvent lui être imputées.

Il a été proposé (Cf. la demande internationale publiée sous le numéro WO 98/09254) de mettre en place une procédure selon laquelle, lors de l'emprunt, l'usager informe un système de contrôle de sa destination, le système réservant alors par avance un emplacement disponible à proximité de cette destination.

Ce système ne résout que partiellement les problèmes évoqués ci-dessus, car il ne permet pas à l'usager de changer de destination au cours de son trajet. De plus, il ne résout pas la question de l'indisponibilité d'emplacements à proximité de la destination choisie par l'utilisateur. En outre, compte tenu de la durée parfois longue des locations, il résulte de cette procédure que nombre de places vacantes, qui pourraient être attribuées en fonction de besoins immédiats, sont en fait inutilement monopolisées dans l'attente de la venue de la bicyclette correspondante. Il en résulte in fine une gestion non optimisée de la flotte.

L'invention vise à remédier aux inconvénients précités, en proposant un procédé de gestion d'une flotte de véhicules, tels que des bicyclettes, qui optimise l'utilisation des emplacements où sont remisés les véhicules, et qui puisse en même temps répondre aux exigences d'ergonomie formulées par les usagers.

A cet effet, l'invention propose, en premier lieu, un procédé de gestion d'une flotte de véhicules propres à être remisés à une station comprenant des emplacements pour des véhicules, cette station étant décrétée disponible lorsque l'un au moins de ses emplacements est libre de tout véhicule, et indisponible lorsque chaque emplacement est occupé par un véhicule, ce procédé comprenant les étapes consistant à :
- détecter l'emprunt d'un véhicule ;
- évaluer la disponibilité de la station ;
- transmettre au véhicule emprunté, par l'intermédiaire de moyens de communication à distance, une information concernant la disponibilité de la station.

De la sorte, il est rendu possible d'informer l'utilisateur d'une bicyclette de la disponibilité (ou, au contraire, de l'indisponibilité) d'une station donnée. L'utilisateur, ainsi prévenu par avance, est, en cas de disponibilité de la station, assuré de pouvoir y remiser sa bicyclette.

En second lieu, l'invention propose un procédé de gestion d'une flotte de véhicules propres à être remisés à plusieurs stations comprenant des emplacements pour des véhicules, chaque station étant décrétée disponible lorsque l'un au moins de ses emplacements est libre de tout véhicule, et indisponible lorsque chaque emplacement de la station est occupé par un véhicule, ce procédé comprenant les étapes consistant à :
- détecter l'emprunt d'un véhicule ;
- évaluer la disponibilité de chaque station ;
- déterminer la ou les stations les plus proches du véhicule ;
- transmettre au véhicule emprunté, par l'intermédiaire de moyens de communication à distance, une information concernant la disponibilité de la ou des stations les plus proches.

Ainsi, l'utilisateur est informé de la disponibilité des stations qui lui sont les plus proches. Il peut choisir par avance, parmi celles qui sont disponibles, celle qui lui convient le mieux en étant assuré de pouvoir y remise sa bicyclette.

En troisième lieu, l'invention propose un procédé de gestion d'une flotte de véhicules propres à être remisés à plusieurs stations comprenant des emplacements pour des véhicules, chaque station étant décrétée disponible lorsque l'un au moins de ses emplacements est libre de tout véhicule, et indisponible lorsque chaque emplacement de la station est occupé par un véhicule, ce procédé comprenant les étapes consistant à :
- détecter l'emprunt d'un véhicule ;
- localiser une station de destination du véhicule ;
- évaluer la disponibilité de la station de destination ;
- transmettre au véhicule emprunté, par l'intermédiaire de moyens de communication à distance, une information concernant la disponibilité de la station de destination.

Ainsi, l'utilisateur est informé de la disponibilité de sa station de destination. En cas de disponibilité, il est assuré de pouvoir y remiser sa bicyclette. Dans l'hypothèse inverse, il peut s'organiser différemment, soit en attendant

Suivant un mode de réalisation, la transmission d'information au véhicule est effectuée par l'intermédiaire d'un relais de communication fixe.

Par ailleurs, l'évaluation de la disponibilité de la ou des stations peut être effectuée en continu, de même que la transmission d'information au véhicule.

Le procédé peut comprendre une étape consistant à afficher l'information de disponibilité sur une interface utilisateur équipant le véhicule, ainsi qu'une étape consistant à détecter l'arrêt du véhicule, l'affichage de l'information de disponibilité n'étant effectué que lorsque cet arrêt est détecté.

L'invention propose également un système de gestion d'une flotte de véhicules propres à être remisés à au moins une station comprenant des emplacements pour des véhicules, la station étant décrétée disponible lorsque l'un au moins de ses emplacements est libre de tout véhicule, et indisponible lorsque chaque emplacement de la station est occupé par un véhicule, ce système comprenant :
- des moyens pour évaluer la disponibilité de la station ;
- des moyens de communication à distance avec un véhicule non remisé ;
- des moyens d'affichage au niveau du véhicule de l'information de disponibilité.

Ce système permet la mise en oeuvre des procédés décrits ci-dessus.

D'autres objets et avantages de l'invention apparaîtront à la lumière de la description faite ci-après en référence aux dessins annexés dans lesquels :
- la figure 1 est une vue en perspective illustrant schématiquement un système de gestion d'une flotte de bicyclettes ;
- la figure 2 est un diagramme illustrant schématiquement l'organisation interne du système de la figure 1 ;
- les figures 3 à 5 sont des diagrammes illustrant un procédé de gestion d'une flotte de véhicules selon l'invention, suivant trois modes de réalisation distincts.

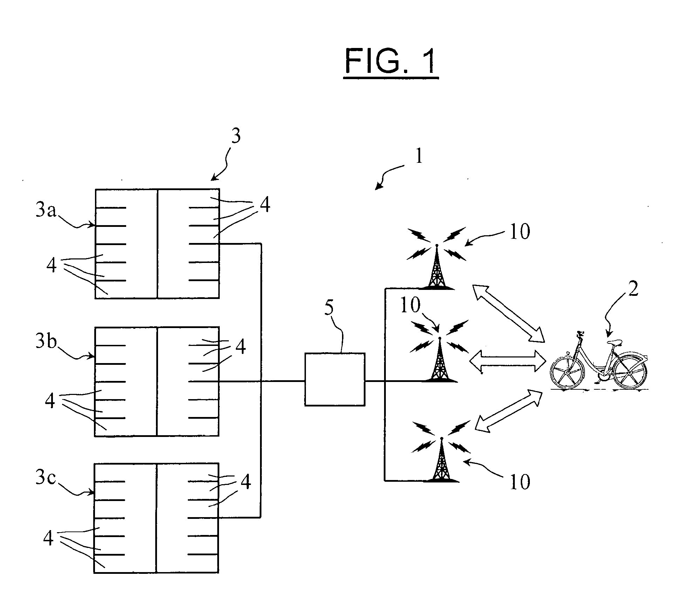

Sur la figure 1 est représenté un système 1 de gestion d'une flotte de bicyclettes 2 proposées à la location, notamment en milieu urbain.

La flotte comporte au moins une station 3 (elle peut en comporter plusieurs, comme cela est représenté sur la figure 1, où sont représentées trois stations 3a, 3b, 3c) munie d'une pluralité d'emplacements 4 où peuvent être remisées les bicyclettes 2.

Si les emplacements 4 sont ici représentés schématiquement par des épis, ils sont en pratique matérialisés par des bornes (non représentées) munies d'un système de verrouillage et auxquelles peuvent être accrochées de manière amovible (contre autorisation) les bicyclettes 2.

La station 3 est décrétée disponible lorsque l'un au moins de ses emplacements 4 est libre de toute bicyclette, et indisponible lorsque chaque emplacement 4 est au contraire occupé par une bicyclette.

Comme cela est représenté sur la figure 1, la ou les stations 3a, 3b, 3c sont reliées à une centrale de commande 5 qui en évalue en continu la disponibilité. En pratique, chaque borne est reliée à cette centrale 5, qui contrôle en fait l'état du système de verrouillage de la borne : lorsque le système est actif (ce qui signifie qu'une bicyclette est accrochée à la borne), l'emplacement 4 correspondant est considéré occupé ; au contraire, lorsque le système est inactif (ce qui signifie qu'aucune bicyclette n'est accrochée à la borne), l'emplacement 4 est considéré inoccupé.

Chaque bicyclette 2 est quant à elle équipée :
- d'une unité centrale 6 de contrôle (CPU) ;
- d'un émetteur/récepteur 7 relié au CPU 6 ;
- d'une interface utilisateur 8 également reliée au CPU 6, qui comprend un écran d'affichage, par exemple du type à cristaux liquides, placé dans un carter supporté par le guidon et visible au travers d'une fenêtre transparente ;
- d'un système 9 de mesure de la vitesse de la bicyclette, lui aussi relié au CPU 6.

Ce système 9 peut, en pratique, être formé par une dynamo équipant l'une des roues de la bicyclette 2, qui délivre au CPU 6 un courant dont l'intensité est proportionnelle à la vitesse de rotation de la roue. Il est notamment possible de détecter l'arrêt de la bicyclette 2, le CPU 6 détectant alors l'absence de courant en provenance de la dynamo. Suivant une alternative possible, l'une des roues de la bicyclette 2 peut être équipée d'un roulement instrumenté qui délivre au CPU 6 un signal proportionnel à la vitesse de rotation de la roue.

Comme cela est visible sur la figure 1, le système 1 comporte une pluralité de relais de télécommunication 10, reliés à la centrale de commande 5, aptes à communiquer à distance avec le CPU 6 de la bicyclette 2 via son émetteur/récepteur 7.

Ces relais 10 et l'émetteur/récepteur 7 sont par exemple agencés pour émettre et recevoir des signaux radio suivant le protocole ISM (Industrial, Scientific, Medical) - dont on rappelle que la bande est à 2,4 Ghz.

En parcours urbain, les relais 10 peuvent être disposés sur le mobilier urbain, ou directement intégrés à celui-ci - il s'agit par exemple d'un MUPI (Mobilier Urbain de Publicité et d'Information), d'un abribus, de feux de signalisation, ou de réverbères. Les relais 10 sont par exemple alimentés au moyen de batteries reliées à l'éclairage public, et rechargées la nuit pendant la période l'allumage de celui-ci. Afin d'augmenter la zone d'action des relais 10 et d'optimiser le fonctionnement du système 1, il est préférable de disposer les relais 10 dans des zones fréquentées, par exemple à proximité des principaux carrefours ou ronds points.

Par ailleurs, afin d'éviter une consommation d'énergie trop importante sans pour autant nuire au fonctionnement du système 1, la puissance d'émission des relais 10 pourra être réglée de manière que leur rayon d'action soit de quelques dizaines de mètres, ce qui, grâce à la disposition des relais 10 en des points soigneusement choisis du parcours urbain, permet une transmission sans faille de l'information aux bicyclettes 2 circulant normalement sur la voie publique.

La puissance de l'émetteur/récepteur 7 de la bicyclette sera également réglée pour que son rayon d'action soit, en cours d'utilisation, de quelques dizaines de mètres, tandis qu'à l'approche de la borne destinatrice et tout au long du remisage, la puissance de l'émetteur/récepteur 7 est réduite à moins d'un mètre, de sorte à ne permettre le dialogue qu'avec la borne à laquelle la bicyclette est accrochée, sans interférer avec les bornes voisines.

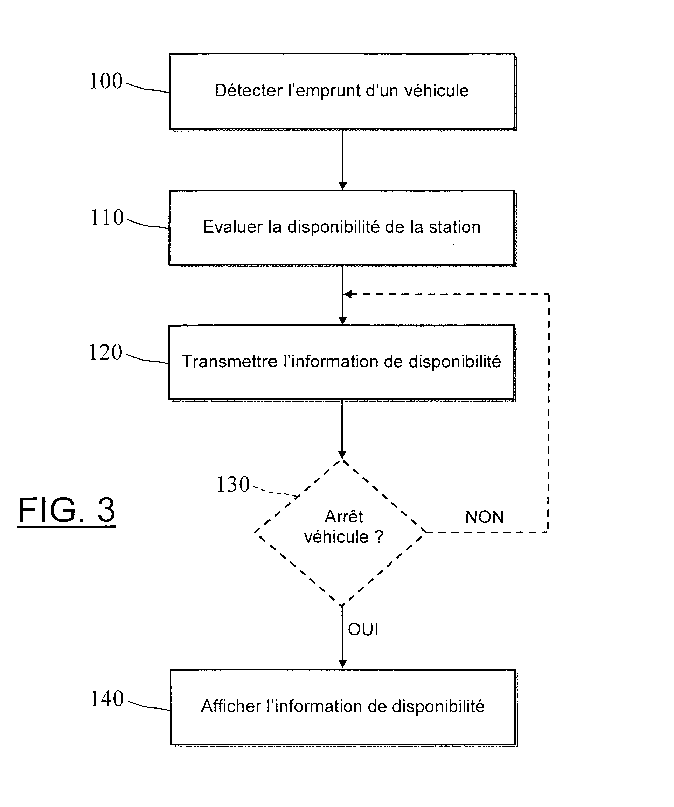

L'architecture qui vient d'être présentée permet, comme nous allons le voir, de gérer la flotte avec une efficacité accrue. Dans ce qui suit, on décrit trois procédés de gestion de la flotte, en référence aux figures 3, 4 et 5 respectivement.

Un premier procédé de gestion de la flotte est décrit en référence à la figure 3. Ce procédé, qui correspond à un mode de réalisation dans lequel l'ensemble de la flotte est prévu pour être remisé à une unique station 3, comprend tout d'abord une étape (100) de détection de l'emprunt d'une bicyclette 2. Cette étape se traduit, concrètement, par la détection du déverrouillage de la borne correspondante.

L'étape suivante consiste à évaluer (110) la disponibilité de la station 3. Cette étape est présentée comme succédant à l'étape (100) de détection car l'emprunt de la bicyclette modifie la disponibilité de la station 3. Mais, en pratique, l'évaluation de la disponibilité de la station 3 est effectuée en continu.

On transmet ensuite (120) au CPU 6 de la bicyclette 2, au moyen des relais 10 et via l'émetteur/récepteur 7, l'information de disponibilité de la station 3, puis on affiche sur l'écran de l'interface utilisateur 8 l'information de disponibilité (140).

Afin d'éviter que l'attention du cycliste ne soit attirée par un affichage intempestif alors même qu'il conduit sa bicyclette, ce qui accroîtrait le risque d'accident, il est envisagé, comme cela est représenté en pointillés sur la figure 3, d'interposer entre l'étape de transmission (120) et l'étape d'affichage (140) une étape (130) de détection de l'arrêt de la bicyclette, l'affichage étant alors subordonné à cette détection (par exemple lorsque la bicyclette est arrêtée à un feu de circulation).

Le procédé qui vient d'être décrit est prévu pour gérer une flotte de véhicules destinés à être tous remisés à une station unique. Dans l'idéal, le nombre de bicyclette correspond exactement au nombre d'emplacements disponibles, de sorte que qu'il pourrait être supposé que la station est en permanence disponible pour tout véhicule emprunté. La réalité peut être différente : il peut arriver que, pour compenser le risque d'accident ou de panne affectant les bicyclettes, le nombre de bicyclettes mises en circulation par l'organisme locatif soit en fait supérieur au nombre d'emplacements. En outre, il peut également arriver qu'une ou plusieurs bornes soient hors service, auquel cas le cycliste, qui est informé de l'indisponibilité de la station, pourra être invité à se rendre directement en un lieu de collecte ad hoc pour les bicyclettes en surplus.

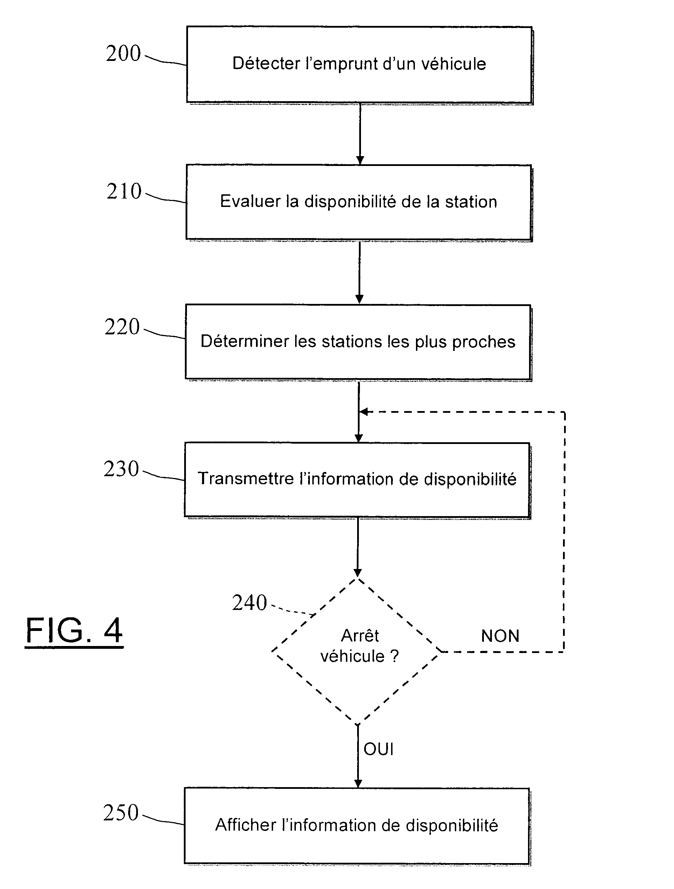

Un second procédé de gestion est décrit en référence à la figure 4. Ce procédé, qui correspond à un mode de réalisation dans lequel plusieurs stations 3a, 3b, 3c sont prévues pour accueillir la flotte de bicyclettes, comprend, comme ci-dessus, une étape (200) de détection de l'emprunt d'une bicyclette.

L'étape suivante (210) consiste à évaluer la disponibilité des stations 3a, 3b, 3c. Comme précédemment, cette étape (210) est présentée comme succédant à l'étape de détection (200) car l'emprunt du véhicule modifie la disponibilité générale des stations 3a, 3b, 3c mais, en pratique, l'évaluation de la disponibilité des stations est effectuée en continu.

On détermine ensuite (220) la ou les stations les plus proches de la localisation courante du véhicule, cette localisation étant connue par le biais de l'identification du ou des relais dialoguant avec le CPU de la bicyclette.

On transmet ensuite (230) au CPU 6 de la bicyclette 2, au moyen des relais 10 et via l'émetteur/récepteur 7, l'information de disponibilité de la station ou des stations les plus proches.

On affiche alors (250) sur l'écran de l'interface utilisateur 8 l'information de disponibilité. Cet affichage peut être réalisé en continu, ou, comme cela est envisagé ci-dessus, subordonné à l'arrêt de la bicyclette, une étape (240) de détection de l'arrêt de la bicyclette étant alors interposée entre l'étape de transmission (230) et l'étape d'affichage (250).

Le cycliste est ainsi informé de la disponibilité de la ou des stations avoisinantes, ce qui lui permet, soit d'être assuré qu'il pourra remiser sa bicyclette, soit de se diriger par anticipation vers d'autres stations.

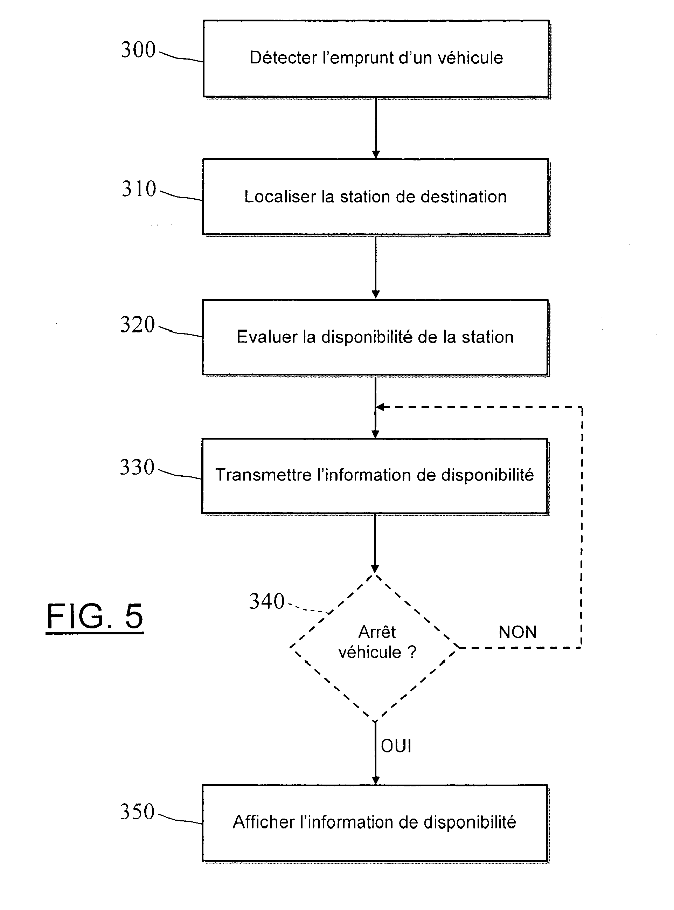

Un troisième procédé de gestion est décrit en référence à la figure 5. Ce procédé, qui correspond à un mode de réalisation dans lequel plusieurs stations 3a, 3b, 3c sont également prévues pour accueillir la flotte de bicyclettes, comprend, comme ci-dessus, une première étape (300) de détection de l'emprunt d'une bicyclette.

L'étape suivante (310) consiste à localiser la station de destination prévue par le locataire. En pratique, cette étape est accomplie par le locataire lui-même, qui sélectionne parmi une liste de stations qui lui sont proposées par un automate, celle à laquelle il souhaite remettre sa bicyclette. Il est également envisageable de permettre au locataire d'identifier une zone géographique dans laquelle il souhaite se rendre, l'automate lui indiquant alors la ou les stations les plus proches de cette zone, ou même comprises dans cette zone.

On évalue ensuite la disponibilité de la station de destination (320). Comme décrit précédemment, cette étape (320) est présentée comme succédant à l'étape de détection car l'emprunt du véhicule modifie la disponibilité générale des stations mais, en pratique, l'évaluation de la disponibilité de la station de destination (et éventuellement des autres stations) est effectuée en continu.

On transmet ensuite (330) au CPU 6 de la bicyclette 2, au moyen des relais 10 et via l'émetteur/récepteur 7, l'information de disponibilité de la station de destination, ou des stations les plus proches de la localisation courante de la bicyclette lorsque la station de destination s'avère indisponible, cette localisation de la bicyclette étant connue par le biais de l'identification du ou des relais 10 dialoguant avec le CPU 6 de la bicyclette 2.

On affiche ensuite (350) sur l'écran de l'interface utilisateur 8 l'information de disponibilité de la station de destination. Cet affichage peut être réalisé en continu, ou, comme cela est envisagé ci-dessus, être subordonné à l'arrêt de la bicyclette, une étape (340) de détection de l'arrêt de la bicyclette étant alors interposée entre l'étape de transmission et l'étape d'affichage.

Ainsi, quel que soit le mode de réalisation retenu, le cycliste est informé en temps utile de la disponibilité de la ou des stations dans lesquelles il souhaite ou peut remiser sa bicyclette en fin de parcours. Il lui est ainsi permis d'optimiser son utilisation de la bicyclette empruntée, sans devoir prévoir dans son temps d'utilisation une marge pour le cas où la station de remise de la bicyclette s'avérerait indisponible. L'ergonomie du système locatif est ainsi améliorée.

Par ailleurs, le système 1 et les procédés qui viennent d'être décrits permettent une optimisation du remplissage des stations 3a, 3b, 3c, dont les emplacements 4 libres peuvent être attribués en fonction des besoins des utilisateurs, tandis que lorsqu'une station est indisponible ces derniers sont automatiquement déviés vers la station disponible la plus proche.

En outre, il est envisageable de gérer le remplissage des stations de manière prédictive, en évitant par anticipation la surcharge d'une station à proximité de laquelle se trouveraient un nombre de bicyclettes supérieur au nombre d'emplacements libres, et en déviant vers la station disponible la plus proche les bicyclettes en surnombre, avant même que les places libres soient toutes occupées.

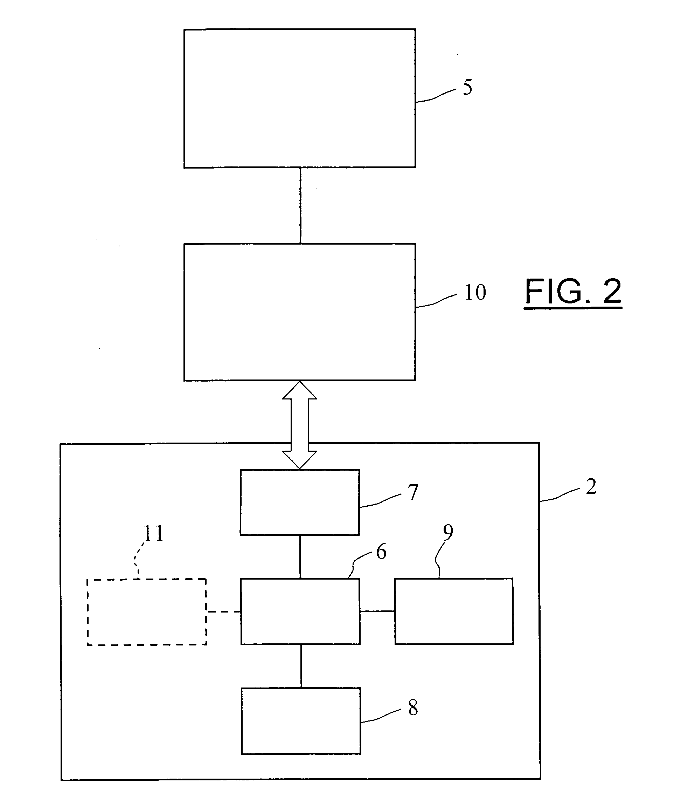

De plus, il est possible de procéder à un guidage des bicyclettes vers les stations, en les équipant d'un gyromètre 11 (en pointillés sur la figure 2) relié au CPU 6. L'information de la direction dans laquelle est orientée la bicyclette, fournie par le gyromètre 11 et communiquée à la centrale de commande 5 par l'intermédiaire de l'émetteur/récepteur 7 et du relais 10 dialoguant avec le CPU 6, est recoupée avec l'information de position de la bicyclette 2 pour fournir à l'utilisateur, par retour, la direction dans laquelle se trouve la station disponible la plus proche.

Il est envisageable de compléter la communication d'informations relatives à la disponibilité des stations par l'évaluation du trajet de la bicyclette, grâce au dialogue qui s'établit entre cette dernière et les relais successifs qu'elle rencontre sur son parcours. Il est ainsi possible, sans recourir à de coûteuses installations de systèmes de positionnement par satellite (GPS) de connaître l'itinéraire de la bicyclette (ce qui peut être utile lorsque l'utilisation de celle-ci est frauduleuse), et de prédire son heure d'arrivée dans la station (ce qui permet de faire un calcul prédictif du remplissage de cette dernière et, lorsque ce calcul prédit une saturation de la station, de dévier les bicyclettes les plus lointaines vers d'autres stations disponibles).

Enfin, bien que l'affichage de l'information de disponibilité sur l'écran de la bicyclette 2 soit prévue pour être réalisé de manière automatique dans les modes de réalisation qui viennent d'être présentés, il est envisageable de subordonner cet affichage à une action de l'utilisateur, tel que l'appui sur un bouton de commande de l'interface utilisateur 8.

Bien que le système et le procédé qui viennent d'être décrits l'aient été pour la gestion d'une flotte de bicyclettes, on comprendra qu'il peut s'agir de tout type de véhicule.

## Revendications

1. Procédé de gestion d'une flotte de véhicules (2) propres à être remisés à une station (3) comprenant des emplacements (4) pour des véhicules (2), cette station (3) étant décrétée disponible lorsque l'un au moins de ses emplacements (4) est libre de tout véhicule (2), et indisponible lorsque chaque emplacement (4) est occupé par un véhicule (2), ce procédé comprenant les étapes consistant à :
- détecter l'emprunt d'un véhicule (2) ;
- évaluer la disponibilité de la station (3) ;
- transmettre au véhicule (2) emprunté, par l'intermédiaire de moyens (7, 10) de communication à distance, une information concernant la disponibilité de la station (3).

2. Procédé de gestion d'une flotte de véhicules (2) propres à être remisés à plusieurs stations (3a, 3b, 3c) comprenant des emplacements (4) pour des véhicules (2), chaque station (3a, 3b, 3c) étant décrétée disponible lorsque l'un au moins de ses emplacements (4) est libre de tout véhicule (2), et indisponible lorsque chaque emplacement de la station (3a, 3b, 3c) est occupé par un véhicule (2), ce procédé comprenant les étapes consistant à :
- détecter l'emprunt d'un véhicule (2) ;
- évaluer la disponibilité de chaque station (3a, 3b, 3c) ;
- déterminer la ou les stations (3a, 3b, 3c) les plus proches du véhicule (2) ;
- transmettre au véhicule (2) emprunté, par l'intermédiaire de moyens (7, 10) de communication à distance, une information concernant la disponibilité de la ou des stations (3a, 3b, 3c) les plus proches.

3. Procédé de gestion d'une flotte de véhicules (2) propres à être remisés à plusieurs stations (3a, 3b, 3c) comprenant des emplacements (4) pour des véhicules (2), chaque station (3a, 3b, 3c) étant décrétée disponible lorsque l'un au moins de ses emplacements (4) est libre de tout véhicule (2), et indisponible lorsque chaque emplacement (4) de la station (3a, 3b, 3c) est occupé par un véhicule (2), ce procédé comprenant les étapes consistant à :
- détecter l'emprunt d'un véhicule (2) ;
- localiser une station (3a, 3b, 3c) de destination du véhicule (2) ;
- évaluer la disponibilité de la station (3a, 3b, 3c) de destination ;
- transmettre au véhicule (2) emprunté, par l'intermédiaire de moyens (7, 10) de communication à distance, une information concernant la disponibilité de la station (3a, 3b, 3c) de destination.

4. Procédé selon l'une des revendications 1 à 3, dans lequel la transmission d'information au véhicule (2) est effectuée par l'intermédiaire d'un relais de communication (10) fixe.

5. Procédé selon l'une des revendications 1 à 4, dans lequel l'évaluation de la disponibilité de la ou des stations (3 ; 3a, 3b, 3c) est effectuée en continu.

6. Procédé selon l'une des revendications 1 à 5, dans lequel la transmission d'information au véhicule (2) est effectuée en continu.

7. Procédé selon l'une des revendications 1 à 6, qui comprend une étape consistant à afficher l'information de disponibilité sur une interface utilisateur (8) équipant le véhicule (2).

8. Procédé selon la revendication 7, qui comprend une étape consistant à détecter l'arrêt du véhicule (2), l'affichage de l'information de disponibilité n'étant effectué que lorsque cet arrêt est détecté.

9. Système de gestion d'une flotte de véhicules (2) propres à être remisés à au moins une station (3a, 3b, 3c) comprenant des emplacements (4) pour des véhicules (2), la station (3a, 3b, 3c) étant décrétée disponible lorsque l'un au moins de ses emplacements (4) est libre de tout véhicule (2), et indisponible lorsque chaque emplacement de la station (3a, 3b, 3c) est occupé par un véhicule (2), ce système comprenant :
- des moyens pour évaluer la disponibilité de la station (3a, 3b, 3c) ;
- des moyens (7, 10) de communication à distance avec un véhicule (2) non remisé ;
- des moyens (8) d'affichage au niveau du véhicule (2) de l'information de disponibilité.
